# EUROPEAN PATENT APPLICATION

(11) **EP 3 203 742 A1**
(43) Date of publication of application: **09.08.2017**
(21) Application number: 16305115.4
(22) Date of filing: 02.02.2016
(51) Int. Cl.: H04N 19/46, G06T 5/50, H04N 19/597

(54) **SYSTEM AND METHOD FOR ENCODING AND DECODING INFORMATION REPRESENTATIVE OF A FOCALIZATION DISTANCE ASSOCIATED TO AN IMAGE BELONGING TO A FOCAL STACK REPRESENTATIVE OF A LIGHT FIELD CONTENT**

(71) Applicant: Thomson Licensing, 92130 Issy-les-Moulineaux (FR)
(72) Inventor: LOPEZ, Patrick, 35576 CESSON-SÉVIGNÉ (FR); GUILLOTEL, Philippe, 35576 CESSON-SÉVIGNÉ (FR); SALMON, Philippe, 35576 CESSON-SÉVIGNÉ (FR)
(74) Representative: Browaeys, Jean-Philippe

(57) **Abstract**

A method for decoding a signal representative of a light-field content comprising at least one focal stack comprising a set of images focused at different focalization distances is provided. It comprises decoding information representative of a focalization distance associated to an image of the focal stack. When the light-field content comprises a plurality of focal stacks corresponding to different viewing angles of a scene, it also comprises decoding information representative of a viewing angle associated to a focal stack of the plurality of focal stacks.

## Description

### 1. Field of the invention

The invention lies in the field of plenoptic imaging and relates to a technique for encoding and decoding a signal representative of a light-field content. More precisely, the invention relates to a technique for encoding or decoding image or video such as focal stacks of images, together with signaling information associated to the focal stacks.

### 2. Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Image acquisition devices project a three-dimensional scene onto a two-dimensional sensor. During operation, a conventional capture device captures a two-dimensional (2D) image of the scene representing an amount of light that reaches a photosensor, or photodetector within the device. However, this 2-D image contains no information about the directional distribution of the light rays that reach the photosensor which may be referred to as the light-field. Depth, for example, is lost during the acquisition. Thus, a conventional capture device does not store most of the information about the light distribution from the scene.

Light-field capture devices also referred to as "light-field data acquisition devices" have been designed to measure a four-dimensional (4D) light-field of the scene by capturing the light from different viewpoints of that scene. Thus, by measuring the amount of light traveling along each beam of light that intersects the photosensor, these devices can capture additional optical information, e.g. about the directional distribution of the bundle of light rays, for providing new imaging applications by post-processing. The information acquired by a light-field capture device is referred to as the light-field data. Light-field capture devices are defined herein as any devices that are capable of capturing light-field data. There are several types of light-field capture devices, among which:
- plenoptic devices, which use a microlens array placed between the image sensor and the main lens, as described in document US 2013/0222633**;**
- a camera array, as described by Wilburn et al. in "High performance imaging using large camera arrays." ACM Transactions on Graphics (TOG) 24, no. 3 (2005): 765-776 and in patent document US 8514491 B2.

The light field data may also be simulated with Computer Generated Imagery (CGI), from a series of 2D images of a scene each taken from a different viewpoint by the use of a conventional handheld camera.

Light-field data processing comprises notably, but is not limited to, generating refocused images of a scene, generating perspective views of a scene, generating depth maps of a scene, generating extended depth of field (EDOF) images, generating stereoscopic images, and/or any combination of these.

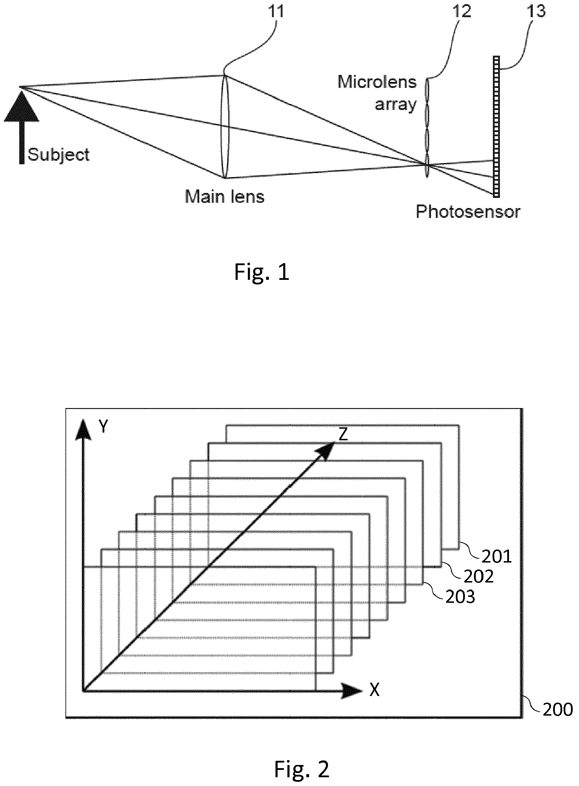

The present disclosure focuses more precisely on light field based image captured by a plenoptic device (as illustrated by **figure 1****)** disclosed by R. Ng, et al. in "Light field photography with a hand-held plenoptic camera" Standford University Computer Science Technical Report CSTR 2005-02, no. 11, April 2005. Such plenoptic device is composed of a main lens (11), a micro-lens array (12) and a photo-sensor (13). More precisely, the main lens focuses the subject onto, or near the micro-lens array. The micro-lens array (12) separates the converging rays into an image on the photo-sensor (13) behind it.

Light field data is usually processed by generating and using a focal stack, which comprises a collection of images each of them being focused at a different focalization distance. Such a focal stack, schematically illustrated in **figure 2****,** allows a user to change a focal point of the images by post-processing. A conventional focusing with a camera may be simulated by selecting one of the images 201, 202, 203 within the focal stack 200, which corresponds to moving the focalization plane perpendicularly to the main optical axis of the camera. Depending on the application, several focal stacks may be computed, each corresponding to a different viewing angle of a same scene. This allows the user to change the viewer perspective by post-processing. A focal stack also allows generating an AIF (All In Focus) image by focus fusion: the in-focus region is detected in each image of the focal stack, then all these in-focus regions are fused to form an AIF image, in which all pixels are in focus, whatever their depth.

Images or videos acquired by light-field acquisition devices may need to be transmitted to other devices, for example to display devices such as mobile phones, tablets, computers, smart televisions (eventually stereoscopic 3D TV set), etc. It is hence important to define a format which would be the best suited for transmitting such light-field contents.

A straightforward solution consists in using standard image or video codecs, such as JPEG (Joint Photographic Experts Group), JPEG-2000, MPEG4 Part 10 AVC (Moving Picture Experts Group - Advanced Video Coding), HEVC (High Efficiency Video Coding) on raw or post-processed plenoptic pictures.

However, this is suboptimal, because of the specificities of plenoptic imaging, which cannot be taken into account by these known coding formats, which have been developed for conventional imaging. Indeed, applying the conventional standard image or video codecs delivers conventional imaging formats that don't offer media interactions and experiences that make light field imaging approach so valuable, such as the possibility for users who receive this content to easily change focus and viewing angle of the scene by post-processing.

Other methods have been proposed to encode plenoptic images or video, which allow the whole focal stacks to be reconstructed at the decoder side. However, the decoded focal stacks do not include by themselves information regarding the viewing angle they are associated to. And a given decoded focal stack does not include by itself information regarding the focalization distances associated to images it comprises. Therefore, while a huge amount of information, i.e.the whole focal stacks, related to the light field content is available at the decoder side, it may still be complex to exploit these data in an efficient way. For example it may be difficult to determine an image that answers user expectations regarding a specific focus plane and a specific viewing angle he wants to apply to the received light field content.

It would hence be desirable to provide a technique for encoding and decoding a signal representative of a light-field content that would avoid at least one drawback of the prior art.

### 3. Summary

According to an embodiment, a method for decoding a signal representative of a light-field content is provided, said light-field content comprising at least one focal stack comprising a set of images focused at different focalization distances. Such a method comprises decoding information representative of a focalization distance associated to one image of said focal stack.

According to an embodiment, the light field content comprises a plurality of focal stacks corresponding to different viewing angles of a scene, and the method for decoding a signal representative of a light-field content also comprises decoding information representative of a viewing angle associated to one focal stack of said plurality of focal stacks.

By light-field content, it is meant here, and throughout this document, an image or a video captured by a light-field acquisition device.

Hence, the present disclosure relies on a different approach for transmitting, and then decoding light-field content. Actually, it consists in decoding not only one or more focal stacks associated to said light field content, but also information representative of focalization distance and, in some embodiments, viewing angle associated to images of the decoded focal stacks. This information may have been transmitted as additional metadata, and may help in rendering the light-field content in a way that specific conditions set by a user at a decoder side are satisfied. For example, this information may be used to determine an image that substantially matches predefined focalization distance and viewing angle selected by a user.

According to an embodiment, such a method also comprises decoding an all-in-focus content associated to one of the focal stacks.

By all-in-focus content, it is meant here and throughout this document, the image or video corresponding to the light-field content, in which all the pixels are in focus, whatever their depth. In one embodiment, the all-in-focus content may be transmitted within the associated focal stack, as an image added to this focal stack.

According to an embodiment, such a method also comprises decoding depth data associated to one of the focal stacks.

By depth data, it is meant here and throughout this document, depth or disparity information, which may have been estimated for example as described by M.W Tao et al. in **"Depth from Combining Defocus and Correspondence Using Light-Field Cameras".**

All-in-focus content and depth data may be used to further improve the rendering of a light field content at the decoder side, by making it possible to interpolate or synthetize images that are not present in the decoded focal stacks. Thus, an image that better matches predefined focalization distance and viewing angle selected by a receiver user may be determined.

The present disclosure also concerns a device for decoding a signal representative of a light-field content comprising at least one focal stack comprising a set of images focused at different focalization distances. Said device comprises a processor configured for decoding information representative of a focalization distance associated to an image of said focal stack. Such a device may be any portable handheld device such as a mobile phone or a smartphone, or a set-top box or a TV set for example.

In an embodiment, the processor of said device is also configured for decoding information representative of a viewing angle associated to a focal stack, when the light-field content comprises a plurality of focal stacks of images corresponding to different viewing angles of a scene.

The present disclosure also concerns a method for rendering a light-field content comprising at least one focal stack comprising a set of images focused at different focalization distances. Such a method comprises:
- determining a focalization distance for said light-field content, delivering an expected focalization distance;
- decoding information representative of a focalization distance associated to an image of said focal stack;
- rendering said light field content, by using said information representative of a focalization distance associated to an image of said focal stack to determine an image whose focalization distance substantially matches said expected focalization distance.

According to an embodiment, the light field content comprises a plurality of focal stacks corresponding to different viewing angles of a scene, and the method for rendering a light-field content also comprises:
- determining a viewing angle for said light-field content, delivering an expected viewing angle;
- decoding information representative of a viewing angle associated to a focal stack of said plurality of focal stacks.

In this embodiment, rendering said light field content further uses said information representative of a viewing angle associated to one of the focal stacks to determine an image whose viewing angle substantially matches said expected viewing angle.

Features and assets previously described in relation to a method for decoding a signal representative of a light-field content also apply to such a method for rendering a light-field content.

The present disclosure also concerns a device for rendering a light-field content comprising at least one focal stack comprising a set of images focused at different focalization distances. Said device comprises a processor configured for decoding a signal representative of the light-field content, and it also comprises:
- a user interface for determining an expected focalization distance for said light-field content;
- a display for rendering said light-field content.

Said processor is also configured for decoding information representative of a focalization distance associated to an image of said at least one focal stack; and for rendering an image whose focalization distance substantially matches said expected focalization distance.

Such a device for rendering a light-field content may be any portable handheld device such as a mobile phone or a smartphone, or a TV set or a computer for example.

According to an embodiment, the light field content comprises a plurality of focal stacks of images corresponding to different viewing angles of a scene, and said user interface is also configured for determining an expected viewing angle for said light-field content. In this embodiment, said processor is also configured for decoding information representative of a viewing angle associated to one of the focal stacks; and for rendering an image whose viewing angle substantially matches said expected viewing angle.

The present disclosure also concerns a signal representative of a light-field content comprising at least one focal stack comprising a set of images focused at different focalization distances. Such a signal comprises at least one field comprising information representative of a focalization distance associated to an image of said at least one focal stack.

According to an embodiment, the light field content comprises a plurality of focal stacks of images corresponding to different viewing angles of a scene, and such a signal also comprises at least one field comprising information representative of a viewing angle associated to one focal stack of said plurality of focal stacks.

The present disclosure also concerns a method for encoding a signal representative of a light-field content comprising at least one focal stack comprising a set of images focused at different focalization distances. Such a method comprises encoding information representative of a focalization distance associated to an image of said at least one focal stack.

According to an embodiment, the light field content comprises a plurality of focal stacks corresponding to different viewing angles of a scene, and the method for encoding a signal representative of a light-field content also comprises encoding information representative of a viewing angle associated to one focal stack of said plurality of focal stacks.

The present disclosure also concerns a device for encoding a signal representative of a light-field content comprising at least one focal stack comprising a set of images focused at different focalization distances. Said device comprises a processor configured for encoding information representative of a focalization distance associated to one image of said focal stack.

Such a device may be a light-field capture device, a set-top box, a computer or any portable handheld device such as a mobile phone or a smartphone for example.

In an embodiment, the processor of said device is also configured for encoding information representative of a viewing angle associated to a focal stack, when the light-field content comprises a plurality of focal stacks of images corresponding to different viewing angles of a scene.

The present disclosure also concerns a computer program product downloadable from a communication network and/or recorded on a medium readable by a computer and/or executable by a processor, comprising program code instructions for implementing the methods as described above.

The present disclosure also concerns a non-transitory computer-readable medium comprising a computer program product recorded thereon and capable of being run by a processor, including program code instructions for implementing the methods as described above.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read--only memory (ROM); an erasable programmable read--only memory (EPROM or Flash memory); a portable compact disc read--only memory (CD-ROM); an optical storage device; a magnetic storage device; or any suitable combination of the foregoing.

It is to be understood that both the foregoing general description and the following detailed description are exemplary and explanatory and are not restrictive of the invention, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. Brief description of the drawings

Embodiments of the invention can be better understood with reference to the following description and drawings, given by way of example and not limiting the scope of protection, and in which:
- **Figure 1** already presented in relation with prior art, schematically illustrates a plenoptic camera;
- **Figure 2** already presented in relation with prior art, is a diagram illustrating an example of a focal stack of images;
- **Figure 3** is a diagram illustrating an exemplary embodiment in which several focal stacks are associated with a same scene;
- **Figure 4** shows an example of frame structure for the signal representative of the light-field content according to an embodiment of the present disclosure;
- **Figure 5** is a flow chart for explaining a process for rendering a light field content according to an embodiment of the present disclosure;
- **Figure 6** is a schematic block diagram illustrating an example of an apparatus for decoding a signal representative of a light-field content according to an embodiment of the present disclosure;
- **Figure 7** is a schematic block diagram illustrating an example of an apparatus for rendering a light-field content according to an embodiment of the present disclosure;
- **Figure 8** is a schematic block diagram illustrating an example of an apparatus for encoding a signal representative of a light-field content according to an embodiment of the present disclosure.

The components in the figures are not necessarily to scale, emphasis instead being placed upon illustrating the principles of the invention.

### 5. Detailed description

The general principle of the present disclosure relies on a peculiar representation format of a light-field or plenoptic content, in which information representative of a focalization distance associated to one image belonging to a focal stack is transmitted besides the focal stack by itself. According to some embodiments of the present disclosure, when said light field content comprises a plurality of focal stacks corresponding to different viewing angles of a same scene, information representative of a viewing angle associated to one focal stack of said plurality of focal stacks is also transmitted.

These pieces of information representative of a focalization distance of an image, and information representative of a viewing angle of a focal stack are transmitted as additional metadata, in order to allow rendering a light field content that meets user expectations at the decoder side, i.e. determining an image whose focalization distance and viewing angle substantially match those selected by the user.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

While not explicitly described, the present embodiments and variants may be employed in any combination or sub-combination.

It must be noted that, in the foregoing, the exemplary embodiments are described in relation to a plenoptic camera.

As already presented in relation with prior art, **figure 2** shows an example of a focal stack of images. Focal stack 200 is a collection of N images focused at different planes, which defines a cube of images (201, 202, 203...), where N is a user-selected number of images or a limitation required by a device (e.g. encoder/decoder). Hence, the distance or distance interval, on the z axis, between two consecutive images in the focal stack 200 corresponds to the distance between two focal planes linked to these two consecutive images. In other words, a focal stack is a set of images of a same scene focused at different focalization distances.

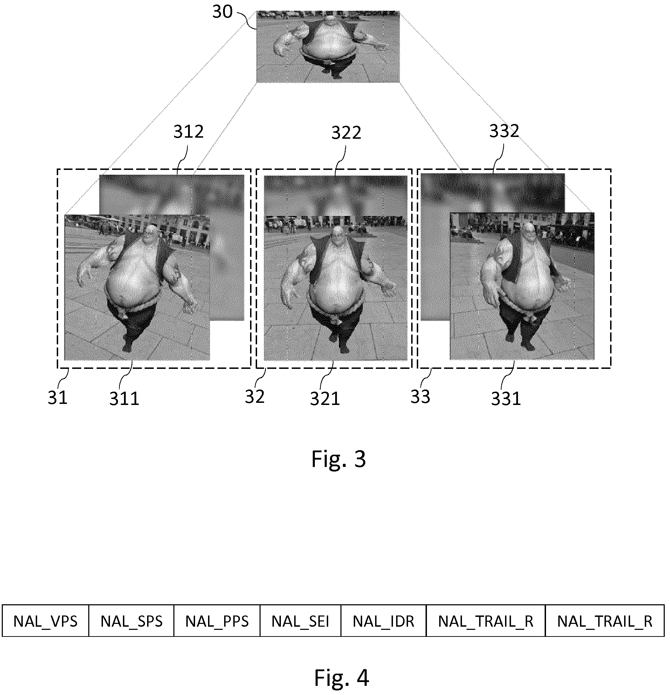

Depending on the application, a plurality of focal stacks may be captured at the same time, each focal stack being associated with a different viewing angle of the captured scene. As an example, **figure 3** illustrates an example of three focal stacks 31, 32, 33 captured from a same scene 30, each focal stack being associated with a different viewing angle of the scene 30. In a first viewing angle, the main character is captured front view (focal stack 32). In the two other viewing angles, the main character is captured slightly from the right-hand side (focal stack 31) or from the left-hand side (focal stack 33). In the example of figure 3, two focus planes - corresponding to two focalization distances - are available: a first focus plane where the images 311, 321 and 331 have been captured, and a second focus plane where the images 312, 322 and 332 have been captured.

It should be understood that figure 3 is intended to be illustrative only, as an example of a set of focal stacks that may be encoded in a signal representative of a light field content. Depending on many parameters, application, capabilities of the encoder, etc., the set of focal stacks encoded may be only a subset of the focal stacks initially captured. For example, only one focal stack, e.g. the one corresponding to a front view capture, may be encoded. If more than one focal stack is encoded, the number of images within each focal stack may also vary from one focal stack to another, e.g. to favour a specific viewing angle of interest, the front view for example.

According to embodiments of the present disclosure, information representative of a focalization distance of an image belonging to a focal stack and information representative of a viewing angle of a focal stack are encoded as additional metadata in the bit stream representative of the light-field content, while the focal stacks by themselves are encoded with standard video codecs (such as for example AVC-3D, MVC, HEVC-3D).

For example, information representative of a focalization distance of an image belonging to a focal stack and information representative of a viewing angle of a focal stack may be added in a Supplemental Enhancement Information (SEI) message, while focal stacks are encoded with the HEVC video compression standard.

According to another embodiment, information representative of a focalization distance of an image belonging to a focal stack and information representative of a viewing angle of a focal stack are encoded as high level syntax elements. For example, information representative of a focalization distance of an image belonging to a focal stack and information representative of a viewing angle of a focal stack may be added in the HEVC Video Parameter Set (VPS), while focal stacks are encoded in Coded Video Sequences (CVS) which indirectly refer to this VPS.

**Table 1** below gives an example of syntax for the additional metadata comprising information representative of a focalization distance associated to an image belonging to a focal stack, and information representative of a viewing angle associated to a focal stack.

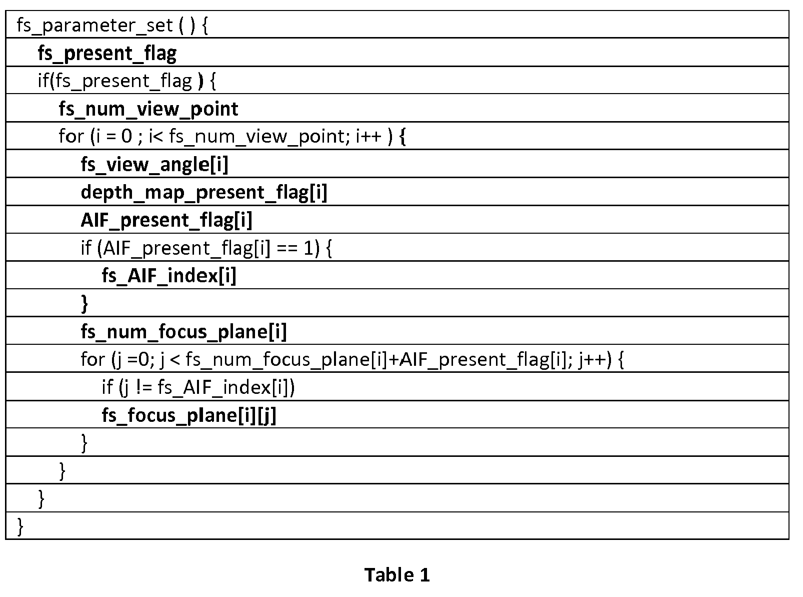

In the example of table 1, *fs*_*num*_*view*_*point* corresponds to the number of available viewing angles, i.e. the number of available focal stacks. *fs*_*view*_*angle* corresponds to information representative of a viewing angle associated to a given focal stack, and *fs_num_focus_plane* corresponds to the number of images focused at different focalization distances within this given focal stack. Finally, *fs_focus_plane* corresponds to information representative of a focalization distance of an image belonging to a focal stack.

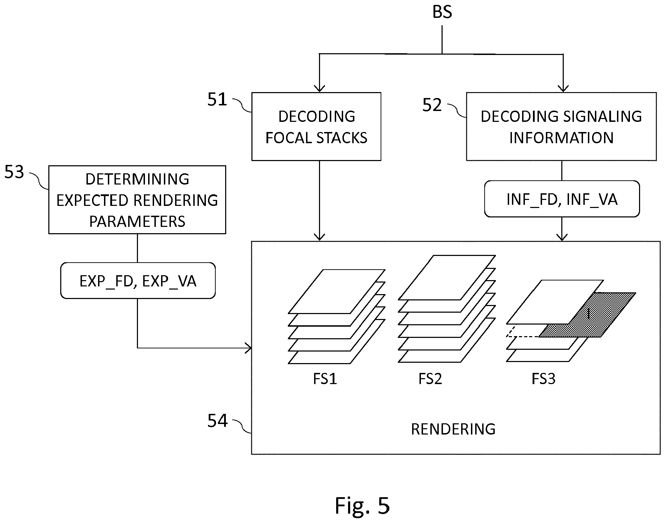

Additionally, two optional pieces of information may be added for each focal stack: an AIF content and depth data, flags AIF_present_flag and depth_map_present_flag are used to indicate whether these optionnal pieces of information are available or not in the bit stream, for a given focal stack. These pieces of information may be useful for rendering the light field content in a way that better reflect the expectations of the user, in terms of focus plane and viewing angle, as it will be described hereafter in relation with figure 5.

It should ne noted that the syntax given in table 1 in only an example and is not restrictive. One of ordinary skill will understand that other structures may be substituted for the one disclosed to achieve at least substantially the same result as the implementation disclosed. For example, information representative of focalization distances associated to the images belonging to a focal stack can take the form of a single focus map associated to this focal stack, which gives a correspondence between each pixel of an image of the scene, for example the AIF image and the focus plane where this pixel is in-focus. The focus map may for example associate each pixel of an image to the number of the image in the stack where this pixel is in-focus.

It should also be noted that, in other embodiments, other additional parameters may be added, allowing for example determining from the knowledge of a single focalization distance associated to one image of the focal stack all the focalization distances associated to each images of the focal stack, a sampling interval parameter for example, assuming that all pairs of consecutive images in the focal stack are spaced this same sampling interval apart from each other. A similar parameter may be transmitted in relation with the viewing angles, allowing to determine from the knowledge of a single viewing angle associated to one focal stack of a plurality of focal stacks all the viewing angles associated to each focal stack.

**Figure 4** shows an example of an HEVC frame structure for the signal representative of the light-field content according to an embodiment of the present disclosure.

In such a frame structure, NAL_VPS (for "Video Parameter Set") is a syntax structure, which provides information on the layers present in the bit stream. NAL_SPS (for "Sequence Parameter Set") is a syntax structure, which provides information on coding parameters like the picture size and the reference lists size. NAL_PPS (for "Picture Parameter Set") is a syntax structure, which provides information on coding parameters like the chroma quantization parameters offsets.

According to embodiments of the present disclosure, a focal stack corresponding to a given viewing angle is encoded in NAL_IDR and NAL_TRAIL_R NAL units, which refer to a PPS, a SPS and a VPS in a given layer.

As explained before, depending on the embodiment of the present disclosure, information representative of a focalization distance of an image belonging to a focal stack and information representative of a viewing angle of a focal stack may be encoded either in NAL_VPS (as high level syntax elements) or in NAL_SEI NAL units.

**Figure 5** is a flow chart for explaining a process for rendering a light-field content according to an embodiment of the present disclosure.

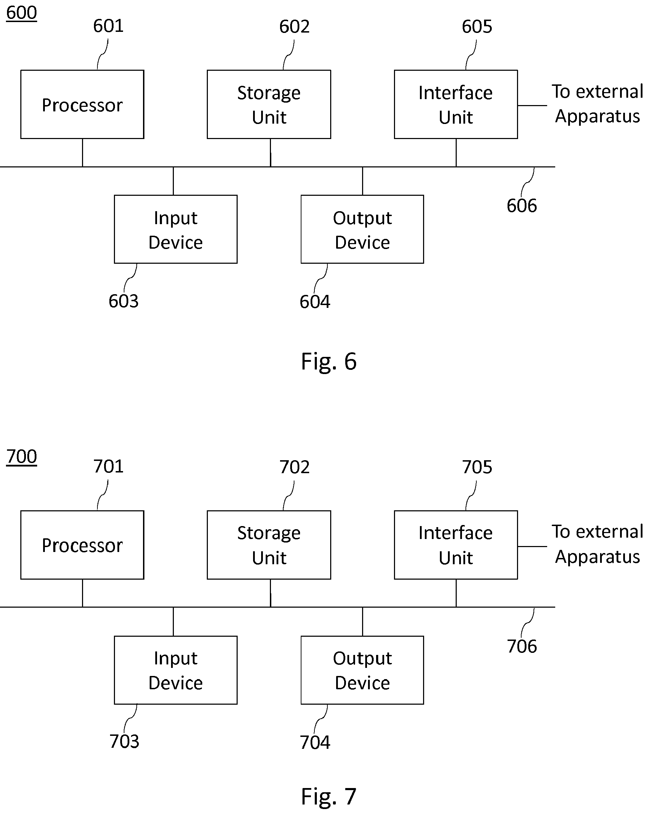

A bit stream BS is received by a decoding device as will be described hereafter in relation with figure 6. Such a decoding device may be a mobile phone, a tablet, a set-top box or a TV set for example. The bit stream BS comprises at least one encoded focal stack representative of a light field content, encoded according to standard video codecs. It also comprises additional metadata, in the form of VPS or SEI for example, comprising signaling information related to encoded focal stack(s): information representative of a focalization distance associated to an image belonging to a focal stack, and, in some embodiment, information representative of a viewing angle of a focal stack.

At step 51, focal stacks (FS1, FS2, FS3 in the example of figure 5) are decoded from the received bit stream BS, each focal stack corresponding to a different viewing angle of a same scene. Each focal stack comprises a set of images focused at different focalization distances. As already explained previously, it should be noted that the focal stacks do not necessary comprise a same number of images.

At step 52, information (INF_FD) representative of a focalization distance associated to one image of a received focal stack is decoded from the received signal. Information (INF_VA) representative of a viewing angle associated to a focal stack and, by extension, to any image within this focal stack, may also be decoded from the received signal, if a plurality of focal stack corresponding to different viewing angles of a same scene are available.

Steps 51 and 52 may be processed in parallel or one after the other, whatever the order, depending on the decoding device.

At step 53, an expected focalization distance (EXP_FD) and an expected viewing angle (EXP_VA) are determined for rendering the light-field content. Expected focalization distance (EXP_FD) and expected viewing angle (EXP_VA) may be selected by the user watching the light-field content, for example through an input device (keyboard, mouse, touchscreen, etc.) allowing to interact with a dedicated user interface displayed by a rendering device as will be described hereafter in relation with figure 7. In another embodiment of the present disclosure, expected focalization distance (EXP_FD) and expected viewing angle (EXP_VA) are determined by the decoding device itself, for example for a very first rendering of the light field content on the rendering device. It should be noted that in some embodiments of the present disclosure, the decoding device and the rendering device may be one and same device, for example a smart TV or a mobile phone. In other embodiments, the decoding device and the rendering device may be separated devices working conjointly, such as a set-top box as a decoding device and a TV set as a rendering device.

Information (INF_FD) representative of a focalization distance and information (INF_VA) representative of a viewing angle are used to determine an image, which substantially matches the expected focalization distance (EXP_FD) and expected viewing angle (EXP_VA) previously selected, thus allowing rendering (54) the light field content accordingly.

Depending on different parameters, the way this image is determined may vary.

In one embodiment of the present disclosure, it may consist in selecting, among all the images available in all the decoded focal stacks, the image whose viewing angle and focalization distance are closest to the expected focus plane (EXP_FP) and viewing angle (EXP_VA) determined at step 53 (image I of figure 5). This can be achieved for example by:
- comparing the expected viewing angle (EXP_VA) to the information (INF_VA) representative of a viewing angle associated to each focal stack to select the focal stack whose viewing angle is closest to the expected viewing angle (EXP_VA); and, within this selected focal stack,
- comparing the expected focalization distance (EXP_FD) to the information (INF_FD) representative of a focalization distance associated to each image of the selected focal stack, to select the image whose focalization distance is closest to the expected focalization distance (EXP_FD).

Such a solution may be particularly suitable for a decoder with low computing power, for example a decoder included in a mobile phone with limited resources.

In another embodiment of the present disclosure, suitable for example for a decoder with a higher computing power such as the one included within a computer or a set-top box, it is possible to perform interpolation to determine an image that better matches the expected focalization distance (EXP_FD) and the expected viewing angle (EXP_VA) selected by the user or set by the decoder at step 53, if such an image is not already available within the decoded focal stacks. The images whose viewing angle and focalization distance are closest to the expected focalization distance (EXP_FD) and viewing angle (EXP_VA) chosen by the user may be used to perform this interpolation. Additionally or alternatively, this interpolation may also rely on the use of an all-in-focus (AIF) content and depth data associated to some focal stacks to synthetize an image which is in-focus in the expected focus plane, and whose viewing angle is the one expected. In this embodiment, all-in-focus (AIF) content and depth data may have been decoded from bit stream BS at step 52. For example, when both all-in-focus (AIF) content and depth data are encoded in the bit stream BS, it is possible to synthetize at the decoder side an image that matches the expected focalization distance (EXP_FD), by applying a blurring model to the all-in-focus (AIF) content. Such a blurring model may be either predefined at the decoder side, or transmitted in the bit stream. This blurring model takes account of the depth data. For example all the pixels of the AIF content that corresponds to the expected focus plane, i.e. that have the same depth than the one of the expected focus plane, are kept unchanged in the synthetized image, as they should belong to on-focus parts of the image. On the contrary, a blurring function is applied to other pixels, as they should belong to out-of-focus parts of the image. This blurring function may depend on the difference between the pixel depth and the depth of the expected focus plane.

In another embodiment of the present disclosure, no all-in-focus (AIF) content is encoded in the bit stream BS, and only depth data associated to some focal stacks is available. Although such a case may not allow the rendering at the decoder side of an image that precisely matches the expected focalization distance (EXP_FD) and viewing angle (EXP_VA) chosen by the user, it is still a case of interest since it allows synthetizing an image that still depends on these user choices.

For example, considering the depth D_{EXP} of the expected focus plane, it is possible to determine in a focal stack available at the decoder side two images I₁ and I₂ whose focalization distances are closest to the expected focalization distance (EXP_FD) and are respectively associated to depths D₁ and D₂, where D₁ < D_{EXP} < D₂. From the two images I₁ and I₂ and from the depth data associated to the focal stack, it is then possible to synthetize an image wherein:
- pixels having a depth below the depth D₁ are extracted from images I₁;
- pixels having a depth above the depth D₂ are extracted from images I₂;
- pixels having a depth between D₁ and D₂ are obtained by the use of an interpolation function applied on the corresponding pixels values in images I₁ and I₂, and that may take into account the pixel depth.

In other words, the synthetized image is obtained by combining parts of image I₁, parts of image I₂, and parts obtained by interpolating parts of I₁ and corresponding parts of I₂.

**Figure 6** is a schematic block diagram illustrating an example of a device for decoding a signal representative of a light-field content according to an embodiment of the present disclosure. Such a device may be any portable handheld device such as a mobile phone or a smartphone, or a set-top box or a TV set for example.

An apparatus 600 illustrated in figure 6 includes a processor 601, a storage unit 602, an input device 603, an output device 604, and an interface unit 605 which are connected by a bus 606. Of course, constituent elements of the computer apparatus 600 may be connected by a connection other than a bus connection using the bus 606.

The processor 601 controls operations of the apparatus 600. The storage unit 602 stores at least one program to be executed by the processor 601, and various data, including decoded focal stacks, associated signaling information - such as information representative of a focalization distance associated to an image belonging to a focal stack, and eventually information representative of a viewing angle of a focal stack, AIF content and/or depth data - and parameters used by computations performed by the processor 601, intermediate data of computations performed by the processor 601, and so on. The processor 601 may be formed by any known and suitable hardware, or software, or a combination of hardware and software. For example, the processor 601 may be formed by dedicated hardware such as a processing circuit, or by a programmable processing unit such as a CPU (Central Processing Unit) that executes a program stored in a memory thereof.

The storage unit 602 may be formed by any suitable storage or means capable of storing the program, data, or the like in a computer-readable manner. Examples of the storage unit 602 include non-transitory computer-readable storage media such as semiconductor memory devices, and magnetic, optical, or magneto-optical recording media loaded into a read and write unit. The program causes the processor 601 to perform a process for decoding a signal representative of a light-field content according to an embodiment of the present disclosure as described previously.

The input device 603 may be formed by a keyboard, a pointing device such as a mouse, or the like for use by the user to input commands. The output device 604 may be formed by a display device to display, for example, one image of a decoded focal stack or an AIF picture allowing the user to select an expected focus plane and/or viewing angle to render the light field content. The input device 603 and the output device 604 may be formed integrally by a touchscreen panel, for example. The input device 603 may be used by an operator for selecting, on an image extracted from a decoded focal stack or on an AIF image, the focus plane and the viewing angle of the light-field content to be rendered. Such a focus plane and viewing angle may then be stored into storage unit 602.

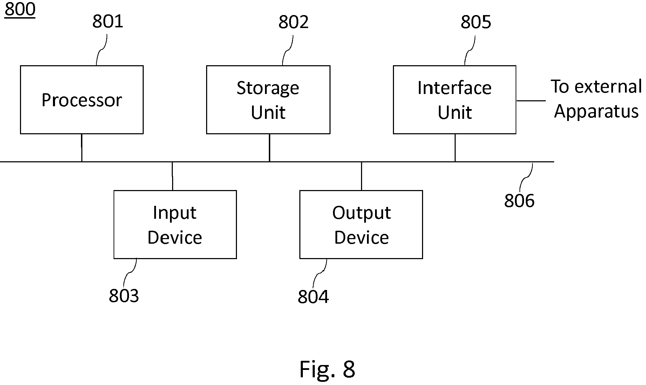

The interface unit 605 provides an interface between the apparatus 600 and an external apparatus. The interface unit 605 may be communicable with the external apparatus via cable or wireless communication. In this embodiment, the external apparatus may be the encoding device 800 of figure 8, a display device or the rendering device 700 of figure 7.

Although only one processor 601 is shown on figure 6, it must be understood that such a processor may comprise different modules and units embodying the functions carried out by apparatus 600 according to embodiments of the present disclosure, such as:
- a module for decoding (51) at least one focal stack associated to the light-field content;
- a module for decoding (52) information representative of a focalization distance associated to an image of the focal stack, and for decoding information representative of a viewing angle associated to one focal stack;

These modules and units may also be embodied in several processors 81 communicating and co-operating with each other.

**Figure 7** is a schematic block diagram illustrating an example of a device for rendering a light-field content according to an embodiment of the present disclosure. Such a device may be any portable handheld device such as a mobile phone or a smartphone, or a set-top box or a TV set for example.

An apparatus 700 illustrated in figure 7 includes a processor 701, a storage unit 702, an input device 703, an output device 704, and an interface unit 705 which are connected by a bus 706. Of course, constituent elements of the computer apparatus 700 may be connected by a connection other than a bus connection using the bus 706.

The processor 701 controls operations of the apparatus 700. The storage unit 702 stores at least one program to be executed by the processor 701, and various data, including decoded depth data or AIF content, the focus plane FP of the light-field content, parameters used by computations performed by the processor 701, intermediate data of computations performed by the processor 701, and so on. The processor 701 may be formed by any known and suitable hardware, or software, or a combination of hardware and software. For example, the processor 701 may be formed by dedicated hardware such as a processing circuit, or by a programmable processing unit such as a CPU (Central Processing Unit) that executes a program stored in a memory thereof.

The storage unit 702 may be formed by any suitable storage or means capable of storing the program, data, or the like in a computer-readable manner. Examples of the storage unit 702 include non-transitory computer-readable storage media such as semiconductor memory devices, and magnetic, optical, or magneto-optical recording media loaded into a read and write unit. The program causes the processor 701 to perform a process for rendering a light-field content according to an embodiment of the present disclosure as described previously.

The input device 703 may be formed by a keyboard, a pointing device such as a mouse, or the like for use by the user to input commands. The output device 704 may be formed by a display device to display, for example, the final image determined by applying the method for rendering previously described. The input device 703 and the output device 704 may be formed integrally by a touchscreen panel, for example. The input device 703 may be used by an operator for selecting the focus plane or the viewing angle of the light-field content to be rendered. Such a focus plane and viewing angle may then be stored into storage unit 702.

The interface unit 705 provides an interface between the apparatus 700 and an external apparatus. The interface unit 705 may be communicable with the external apparatus via cable or wireless communication. In this embodiment, the external apparatus may be the encoding device 800 of figure 8.

Although only one processor 701 is shown on figure 7, it must be understood that such a processor may comprise different modules and units embodying the functions carried out by apparatus 700 according to embodiments of the present disclosure, such as:
- a module for decoding (51) at least one focal stack associated to the light-field content;
- a module for decoding (52) information representative of a focalization distance associated to an image of the focal stack, and for decoding information representative of a viewing angle associated to one focal stack;
- a module for determining and rendering (54) the final picture.

These modules and units may also be embodied in several processors 701 communicating and co-operating with each other.

**Figure 8** is a schematic block diagram illustrating an example of a device for encoding a signal representative of a light-field content according to an embodiment of the present disclosure. Such a device may be a light-field capture device, a set-top box, a computer or any portable handheld device such as a mobile phone or a smartphone for example.

An apparatus 800 illustrated in figure 8 includes a processor 801, a storage unit 802, an input device 803, an output device 804, and an interface unit 805 which are connected by a bus 806. Of course, constituent elements of the computer apparatus 800 may be connected by a connection other than a bus connection using the bus 806.

The processor 801 controls operations of the apparatus 800. The storage unit 802 stores at least one program to be executed by the processor 801, and various data, including parameters used by computations performed by the processor 801, intermediate data of computations performed by the processor 801, and so on. The processor 801 may be formed by any known and suitable hardware, or software, or a combination of hardware and software. For example, the processor 801 may be formed by dedicated hardware such as a processing circuit, or by a programmable processing unit such as a CPU (Central Processing Unit) that executes a program stored in a memory thereof.

The storage unit 802 may be formed by any suitable storage or means capable of storing the program, data, or the like in a computer-readable manner. Examples of the storage unit 802 include non-transitory computer-readable storage media such as semiconductor memory devices, and magnetic, optical, or magneto-optical recording media loaded into a read and write unit. The program causes the processor 801 to perform a process for encoding a signal representative of a light-field content according to an embodiment of the present disclosure as described previously.

The input device 803 may be formed by a keyboard, a pointing device such as a mouse, or the like for use by the user to input commands. The output device 804 may be formed by a display device to display, for example, the focal stack associated to the light-field content. The input device 803 and the output device 804 may be formed integrally by a touchscreen panel, for example. The input device 803 may be used by an operator for selecting an encoding rate or an encoding strategy (consisting in removing some focal stacks or some images of some focal stacks before encoding, for example, depending on application and in order to reduce the amount of data to transmit). Such an encoding rate and set of modified focal stacks may then be stored into storage unit 802.

The interface unit 805 provides an interface between the apparatus 800 and an external apparatus. The interface unit 805 may be communicable with the external apparatus via cable or wireless communication. In this embodiment, the external apparatus may be the plenoptic camera of figure 1.

Although only one processor 801 is shown on figure 8, it must be understood that such a processor may comprise different modules and units embodying the functions carried out by apparatus 800 according to embodiments of the present disclosure, such as:
- a module for encoding at least one focal stack associated to the light-field content according to a standard video codec such as HEVC;
- a module for encoding information representative of a focalization distance associated to an image of the focal stack, and for encoding information representative of a viewing angle associated to a focal stack, as additional metadata, for example as a VPS or a SEI message as defined in the HEVC standard.

These modules and units may also be embodied in several processors 801 communicating and co-operating with each other.

The present disclosure thus provides a system and method allowing rendering a light-field content that substantially match user expectations in terms of focus plane and viewing angle, thanks to an appropriate representation format of the signal representative of the light-field content, which comprises a field comprising information representative of a focalization distance associated to an image belonging to a focal stack representative of the light field content. In some embodiments, such a signal also comprises a field comprising information representative of a viewing angle associated to a focal stack, in particular when the light field content is associated to a plurality of focal stacks corresponding to different viewing angles of a same scene.

## Claims

1. A method for decoding a signal representative of a light-field content comprising at least one focal stack comprising a set of images focused at different focalization distances, **wherein** said method comprises decoding information representative of a focalization distance associated to an image of said focal stack.

2. The method of claim 1, **wherein** said light-field content comprises a plurality of focal stacks corresponding to different viewing angles of a scene associated to said light-field content, **and wherein** said method also comprises decoding information representative of a viewing angle associated to a focal stack of said plurality of focal stacks.

3. The method of claim 1 or 2, **wherein** it also comprises decoding an all-in-focus content associated to one of said focal stacks.

4. The method of any of claims 1 to 3, **wherein** it also comprises decoding depth data associated to one of said focal stacks.

5. A device for decoding a signal representative of a light-field content comprising at least one focal stack comprising a set of images focused at different focalization distances, **wherein** said device comprises a processor configured for decoding information representative of a focalization distance associated to an image of said focal stack.

6. The device of claim 5, **wherein** said light-field content comprises a plurality of focal stacks of images corresponding to different viewing angles of a scene associated to said light-field content, and **wherein** said processor is also configured for decoding information representative of a viewing angle associated to a focal stack of said plurality of focal stacks.

7. A method for rendering a light field content comprising at least one focal stack comprising a set of images focused at different focalization distances, wherein said method comprises:
- determining a focalization distance for said light-field content, delivering an expected focalization distance;
- decoding information representative of a focalization distance associated to an image of said focal stack;
- rendering said light field content, by using said information representative of a focalization distance associated to an image of said focal stack to determine an image whose focalization distance substantially matches said expected focalization distance.

8. The method of claim 7, **wherein** said light field content comprises a plurality of focal stacks of images corresponding to different viewing angles of a scene associated to said light-field content, **wherein** said method further comprises:
- determining a viewing angle for said light-field content, delivering an expected viewing angle;
- decoding information representative of a viewing angle associated to a focal stack of said plurality of focal stacks;
**and wherein** rendering said light field content further uses said information representative of a viewing angle associated to a focal stack of said plurality of focal stacks to determine an image whose viewing angle substantially matches said expected viewing angle.

9. A device for rendering a light-field content comprising at least one focal stack comprising a set of images focused at different focalization distances, said device comprising a processor configured for decoding a signal representative of said light-field content, **wherein** said device also comprises:
- a user interface for determining an expected focalization distance for said light-field content;
- a display for rendering said light-field content;
**and wherein** said processor is also configured for decoding information representative of a focalization associated to an image of said at least one focal stack, and for rendering an image whose focalization distance substantially matches said expected focalization distance.

10. The device of claim 9, **wherein** said light field content comprises a plurality of focal stacks of images corresponding to different viewing angles of a scene associated to said light-field content, **and wherein** said user interface is also configured for determining an expected viewing angle for said light-field content and said processor is also configured for decoding information representative of a viewing angle associated to a focal stack of said plurality of focal stacks, and for rendering an image whose viewing angle substantially matches said expected viewing angle.

11. A method for encoding a signal representative of a light-field content comprising at least one focal stack comprising a set of images focused at different focalization distances, **wherein** said method comprises encoding information representative of a focalization distance associated to an image of said at least one focal stack.

12. The method of claim 11, **wherein** said light field content comprises a plurality of focal stacks of images corresponding to different viewing angles of a scene associated to said light-field content, **and wherein** said method also comprises encoding information representative of a viewing angle associated to a focal stack of said plurality of focal stacks.

13. A device for encoding a signal representative of a light-field content comprising at least one focal stack comprising a set of images focused at different focalization distances, **wherein** said device comprises a processor configured for encoding information representative of a focalization distance associated to an image of said at least one focal stack.

14. The device of claim 13, **wherein** said light field content comprises a plurality of focal stacks of images corresponding to different viewing angles of a scene associated to said light-field content, **and wherein** said processor is configured for encoding information representative of a viewing angle associated to a focal stack of said plurality of focal stacks.

15. A computer program product downloadable from a communication network and/or recorded on a medium readable by a computer and/or executable by a processor, comprising program code instructions for implementing a method according to any one of claims 1 to 5, 7 to 8, or 11 to 12.
